# EUROPEAN PATENT SPECIFICATION

(11) **EP 2 337 034 B1**
(45) Date of publication and mention of the grant of the patent: **25.12.2013**
(21) Application number: 09813296.2
(22) Date of filing: 19.02.2009
(51) Int. Cl.: G21C 3/322, G21C 3/352, G21C 3/356

(54) **MIXING GRID OF A NUCLEAR REACTOR FUEL ASSEMBLY**
MISCHGITTER EINES KERNREAKTORBRENNSTABBÜNDELS
RESEAU DE MELANGE D'ASSEMBLAGE COMBUSTIBLE DE REACTEUR NUCLEAIRE

(30) Priority: 15.09.2008 RU 2008136787
(43) Date of publication of application: 22.06.2011
(73) Proprietor: Otkritoye Akcionernoe Obshchestvo "Mashinostroitelny Zavod", Elektrostal 144001 (RU)
(72) Inventor: SAMOILOV, Oleg Borisovich, N.Novgorod 603000 (RU); ROMANOV, Alexandr Ivanovich, N. Novgorod 603014 (RU); KAIDALOV, Viktor Borisovich, N. Novgorod 603022 (RU); FALKOV, Alexandr Alexeevich, N. Novgorod 603167 (RU); SIMANOVSKAYA Irina Evgenievna, N. Novgorod 603086 (RU); KOSTRITSIN, Vladimir Alexeevich, Moskovskaya obl., Elektrostal 144009 (RU); YEVSTIGNEEV, Igor Vladimirovich, Moskovskaya obl., Noginsk 142400 (RU)
(74) Representative: Einsel, Martin
(86) International application number: PCT/RU2009/000080
(87) International publication number: WO 2010/030207

(56) References cited:
- EP-A1- 0 476 179
- DE-A1- 10 122 489
- GB-A- 2 277 191
- RU-C1- 2 249 865
- RU-C2- 2 204 868
- US-A- 4 089 741
- US-A1- 2007 165 766

## Description

### FIELD OF THE INVENTION

The invention relates to nuclear engineering, in particular, to the design of spacing and mixing grids of fuel assemblies of nuclear power reactors. The invention particularly refers to a mixing grid of a nuclear reactor fuel assembly comprising a hoop and a set of intersecting plates in the form of strips joined to one another and to the hoop to produce a field of cells for accommodating fuel elements and supporting elements of the fuel assembly, at least some of which are hexahedral, and trihedral cells adjacent to the hexahedral cells for the coolant flow, the ends of said hexahedral cells being provided with mixing plate deflectors bent toward the trihedral cells.

### BACKGROUND OF THE INVENTION

A bundle of fuel elements, a top nozzle, and a bottom nozzle are the principal components of a fuel assembly.

As a rule, the fuel elements are secured in the support plate of the bottom nozzle and can expand under the effect of temperature and radiation along the fuel assembly, the fuel elements being spaced from one another by elastic spring action and locking in the cell of the spacing grids extending along the length of the fuel assembly.

To level out the enthalpy in the active zone of the reactor between regions under lower and higher strain, fuel assembly structures comprise devices for mixing the coolant, or mixing grids provided with deflectors to produce turbulence in the coolant flow, said mixing grids extending along the length of the fuel assembly.

A prior art spacing grid has cells to **fix** the fuel elements in position so as to produce secondary channels with two or more deflecting elements placed therein and spaced over height, said deflecting elements causing turbulence in the coolant and directing it toward the fuel elements (WO 96/19811 A1). The flow control deflecting elements are designed as a tree with a stem made in the form of a rectangular plate and branches as guide blades extending from the stem at different levels to agitate the coolant flow. This design is disadvantageous because the deflecting elements can touch the fuel elements at a height greater than the height of the secondary channel, and also because they are difficult to make and install in the grid.

Other prior art spacing grids for the nuclear fuel assemblies have hexahedral cells to accommodate fuel elements and trihedral cells between them, and also circular cells for instrumentation tubes (see US 2007/0165766 A1 and GB 2 277 191 A). Alternatively, they have a square form and cells of different geometry (see DE 101 22 489 A1).

Another prior art mixing and spacing grid design developed for the fuel assembly of a nuclear reactor has a coolant flow control structure consisting of band elements and a device to agitate the coolant flow, with a spacing device consisting of cells to fix the fuel elements in position arranged inside the flow control structure (EP 0 795 177 B1).

The flow control structure (mixing grid) comprises an array of band elements (plates) arranged in a crosswise pattern and provided at the ends thereof with deflectors to agitate the coolant flow, the plates being secured to the hoop of the mixing grid. A field of cells is provided inside the mixing grid for spacing the fuel elements and is securely attached to the hoop of the mixing grid.

This design is disadvantageous because of its increased hydraulic resistance to the coolant flow, making it unsuitable for fuel assemblies releasing much energy.

The closest prior art of the claimed invention is the design of a spacing and mixing grid developed for the fuel assembly of a nuclear reactor, said design comprising an encircling hoop and three groups of crosswise strips parallel to one another in each group, which strips being provided with slots at intersection points thereof, said strips being secured to the hoop. The intersecting strips form hexahedral cells having concave faces and alternate with one another for spacing the fuel elements, and also trihedral cells adjacent thereto in the shape of a convex triangle and trihedral cells in the shape of a regular equilateral triangle, one face thereof being provided with deflectors such as trapezoidal blades designed to agitate the coolant (RU 2,249,865 C1).

The closest prior art design is disadvantageous because of its high hydraulic resistance to the coolant flow, which makes it unsuitable for fuel assemblies releasing much heat.

### SUMMARY OF THE INVENTION

It is an object of the present invention to design an improved mixing grid to be secured on the supporting elements of the fuel assembly bundle.

It is possible, by attaining this object, to produce new technical results such as the possibility of the coolant being agitated effectively and heat removal from the surface of the fuel element jackets improved, and, therefore, the possibility of fuel cycles being improved in operation of a fuel assembly having a high fuel burnout and increased energy release irregularity.

These technical results are achieved in the mixing grid of a nuclear reactor fuel assembly comprising a hoop and a set of intersecting plates in the shape of strips connected to one another and to the hoop at intersection points thereof to define a field of cells to accommodate the fuel elements and supporting elements of the fuel assembly, at least some of the cells being hexahedral, and trihedral cells adjacent to the hexahedral cells for coolant passage, the ends of the trihedral cells being provided with mixing plate deflectors bent toward the trihedral cells, wherein, *according to the invention*, the cells for accommodating supporting elements have a circular shape in cross-section, and the cells for accommodating the fuel elements are hexahedral, two faces of each trihedral cell being concave, and the mixing plate deflectors being provided at the end of the third face and bent such that the deflectors of the trihedral cells adjacent to one hexahedral cell are inclined in one circular direction around said hexahedral cell.

Further, the mixing grid may be provided with a second field of cells for spacing the fuel elements, the cells being connected to one another and to the hoop, arranged in a hexagonal pattern, and each having a hexagonal shape, with three supports for a fuel element, said cells being spaced at 120 degrees from one another and formed by convexities at the faces of a cell directed toward the inside of the same.

The present invention is distinct because the plate deflectors provided on the plates and serving to agitate the coolant flow at the outlet of the mixing grid and bent toward the inside of the trihedral cells adjacent to the hexahedral cells for the **free** passage of the fuel elements are located in a zone **preventing their contact** with the fuel elements; two faces of the trihedral cells being convex to more effectively direct the coolant flow under the deflectors, and because the system of deflectors in a hexagonal pattern of seven cells and six trihedral cells adjacent to the central cell produces circulation in one direction around the central cell of a fragment, to intensify coolant mixing.

The mixing grid comprises a set of plates that have, at the points of intersection thereof, slots allowing the plates to be joined to one another such that, with the purpose of making the structure rigid, the end areas of the plates are joined by welding or soldering at the intersection points of the plates, and the ends of the mixing grid plates are secured, by welding or soldering to the hoop edges to produce an integrated structure.

The hoop of the mixing grid is a shell accommodating the mixing grid plates. To facilitate the manufacture of the mixing grid, it is reasonable to have the hoop consisting of six individual sectors.

It is reasonable, with the purpose of spacing the fuel cells, to provide a field of cells in a single hoop below the mixing grid, said cells having, for example, a hexahedral shape and three supports for the fuel elements in the form of bilges spaced at 120 degrees from one another and connected to one another and the hoop by welding or soldering.

### BRIEF DESCRIPTION OF THE DRAWINGS

- **FIG. 1**: shows a schematic diagram of the mixing grid.
- **FIG. 2**: is a view of a removable element A shown in FIG. 1.
- **FIG. 3**: is a view of a removable element B shown in FIG. 1.
- **FIG. 4**: is a view of a removable element C shown in FIG. 1.
- **FIG. 5**: is a view of a plate provided with slots and deflectors.
- **FIG. 6**: is a view of the mixing grid, with a second field of cells provided in the same hoop for spacing the fuel elements.
- **FIG. 7**: is a view of the second field of cells.

### DESCRIPTION OF AN EMBODIMENT OF THE INVENTION

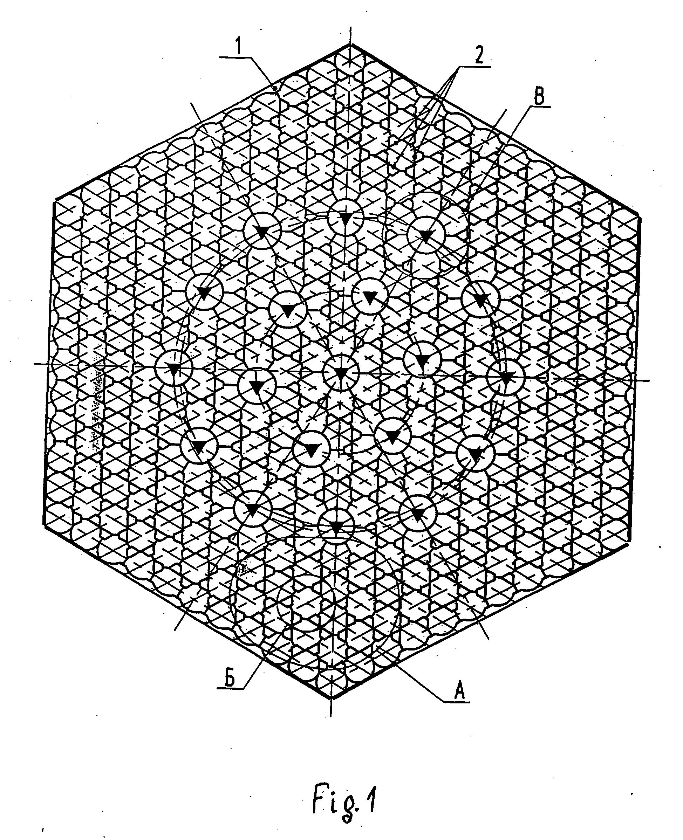

The claimed mixing grid (*see*: **FIG. 1**) comprises a hexahedral hoop 1, with mixing grid plates 2 accommodated within the hoop.

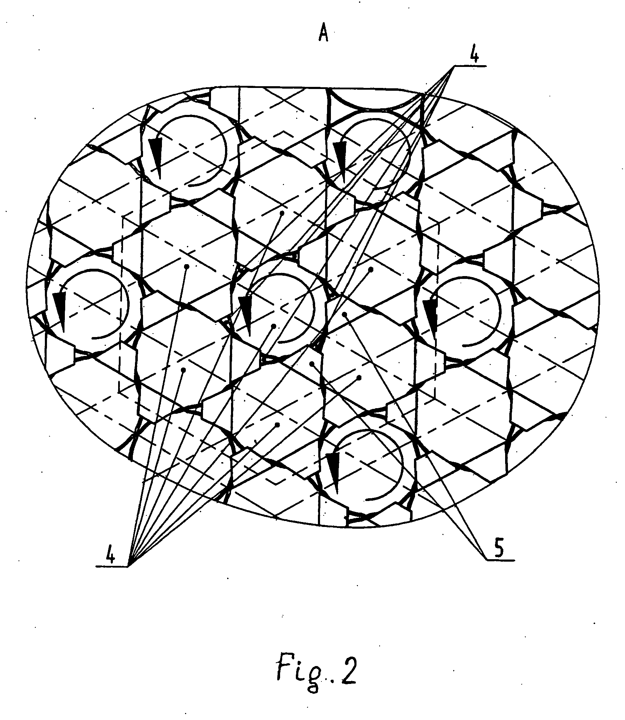

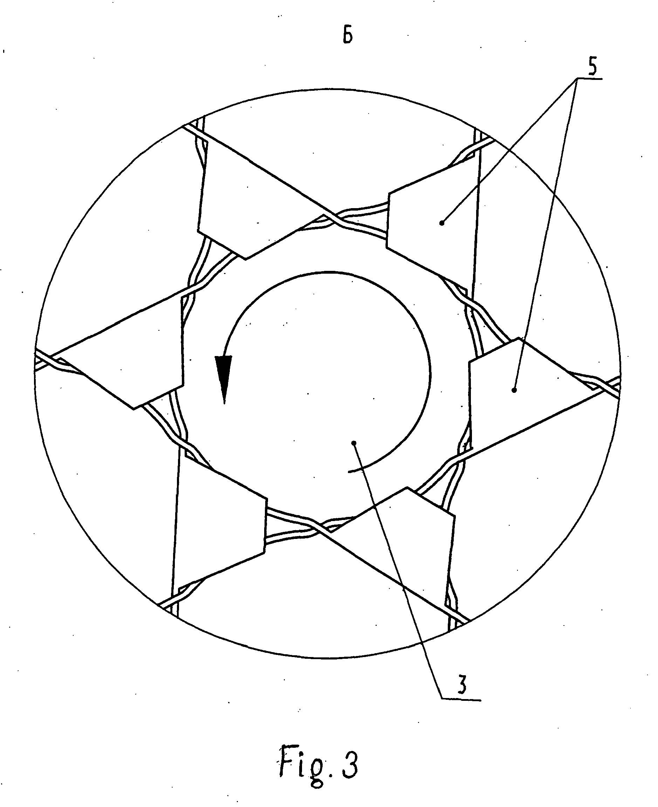

Mixing grid plates 2 are made in the shape of strips intersecting one another and forming (*see*: **FIG. 2**) a field of cells containing fragments of a hexagonal structure of seven hexahedral cells 3 for the free passage of fuel elements and six trihedral cells 4 adjacent to the central hexahedral cell. Two faces of cells 4 are concave, and the third face thereof is provided with plate deflectors 5 bent toward the inside of cell 4. Deflectors 5 (*see*: **FIG. 3**) are designed such that the circular unidirectional inclination of the deflectors of the trihedral cells adjacent to one hexahedral cell 3 produces a swirling movement of the coolant in one direction around the hexahedral cell.

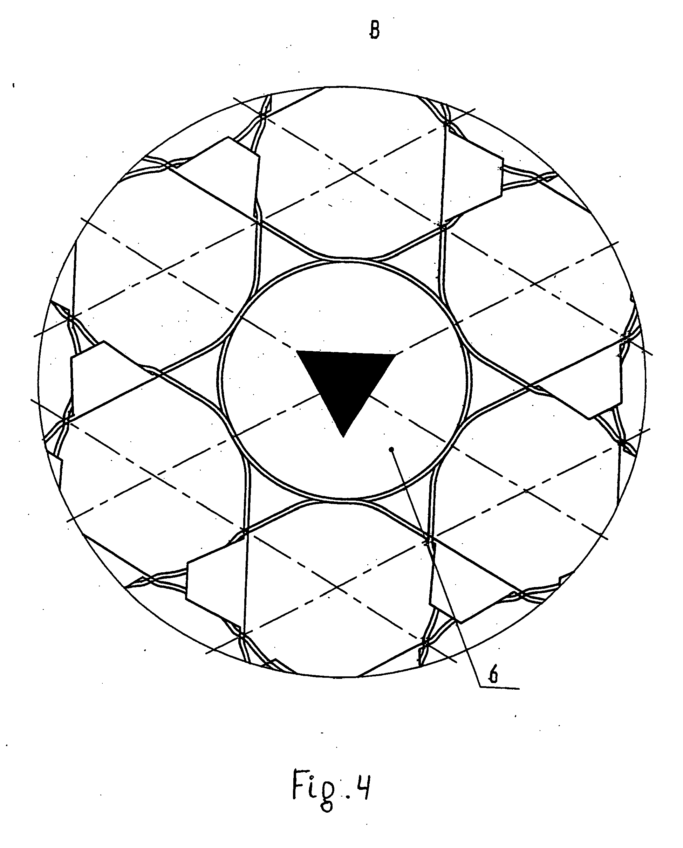

Cells 6 (*see*: FIG. **4**) for the passage of the supporting elements of the fuel assembly structure have a circular shape.

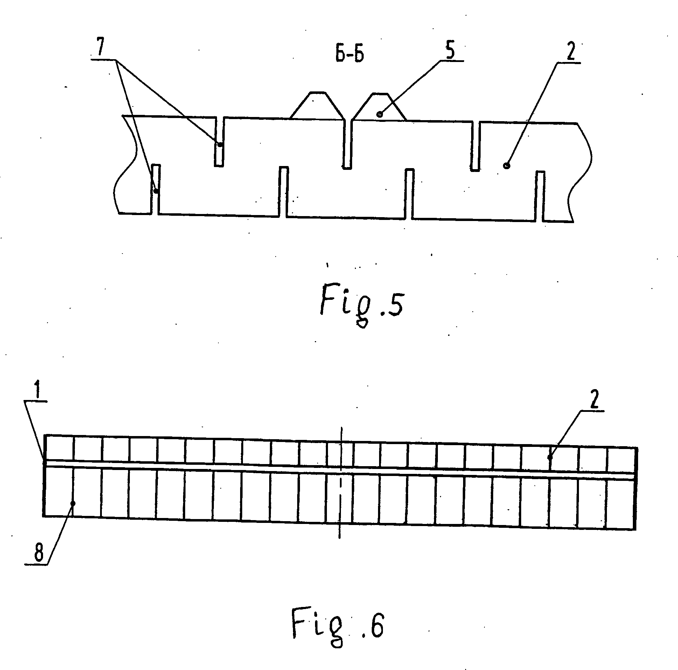

Plates 2 (*see*: **FIG. 5**) have slots 7 at intersection points thereof to join plates 2 together, the end areas of plates 2 being joined by welding or soldering at the intersection points thereof. In a preferred embodiment, deflectors 5 may have a trapezoidal shape.

The ends of mixing grid plates 2 are connected to the edges of hoop 1 by welding or soldering.

Hoop 1 is a shell (*see*: FIG. 1) having six faces. The hoop may consist of six separate sectors.

It is reasonable (*see*: **FIG. 6**) to provide a spacing field of cells 8 on the same hoop 1 below the field of mixing grid plates 2 for spacing the fuel elements.

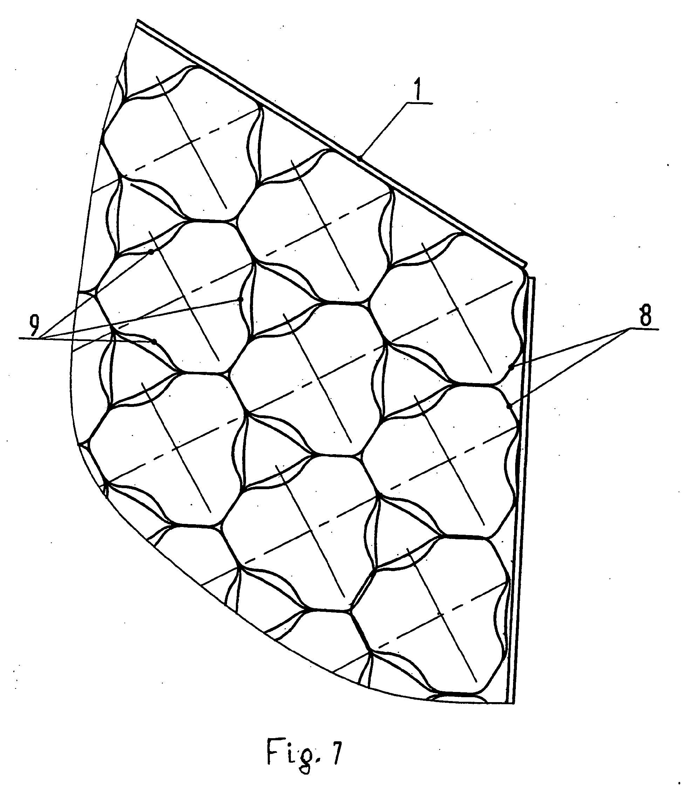

Cells 8 (*see*: **FIG. 7**) may have a hexahedral shape with three supports 9 in the form of bilges for the fuel elements.

The principal functional design element of a fuel assembly is a bundle of fuel elements that are fixed in the cells of the spacing grids extending along the length of the fuel assembly, the spacing grids being joined by structural elements, for example, angle bars to produce a frame.

Mixing grids are provided in the spaces between the spacing grids for mixing the coolant more effectively and for improving heat removal from the surface of fuel element jackets. The spacing grids are secured in the fuel assembly frame by, for example, welding hoops 1 to the angle bars such that the fuel elements pass unobstructed through cells 3 of the mixing grid. The coolant flows in the free space of cells 3 to cool the fuel elements and also through trihedral cells 4, in which the coolant is deflected by deflectors 5 to be mixed at the outlet of the mixing grid with the coolant flowing out of adjacent cells 3 and level out the enthalpy between the adjacent regions of the coolant flowing through the fuel assembly. The additional swirling movement of the coolant around each hexahedral cell caused by deflectors 5 intensifies coolant mixing.

The claimed mixing grid design allows the hydraulic resistance of the mixing grid to be controlled by changing the size and number of deflectors and, depending on the position of the mixing grid in the fuel assembly, level out the enthalpy of the different regions of the reactor active zone.

The claimed invention used in fuel assemblies helps increase the power output of reactors.

The claimed invention can be implemented on existing equipment using standard techniques.

## Claims

1. A mixing grid of a nuclear reactor fuel assembly comprising a hoop (1) and a set of intersecting plates in the form of strips joined to one another and to the hoop (1) to produce a field of cells (3, 4, 6) for accommodating fuel elements and supporting elements of the fuel assembly,
at least some of which are hexahedral (3), and
trihedral cells (4) adjacent to the hexahedral cells (3) for the coolant flow, the ends of said hexahedral cells (3) being provided with mixing plate deflectors (5) bent toward the trihedral cells (4),
***wherein*** the cells (6) for accommodating the supporting elements have a circular shape in cross-section, and
the cells (3) for accommodating the fuel elements being hexahedral,
two faces of each trihedral cell (4) being concave and
the mixing plate deflectors (5) being provided at the end of the third face and
bent such that the deflectors (5) of the trihedral cells (4) adjacent to a single hexahedral cell (3) are inclined in one circular direction around said hexahedral cell (3).

2. The mixing grid as claimed in claim 1, further comprising a second field of cells (8) for spacing the fuel elements joined to one another and to the hoop (1),
said cells (8) being arranged in a hexagonal pattern and each cell (8) having a hexagonal shape with three supports (9) for a fuel element, and further
being spaced at 120 degrees from one another and
formed by the convexities on the faces of the cell (8) and directed toward the inside thereof.

## Patentansprüche

1. Mischgitter eines Brennstabbündels eines Kernreaktors mit einem Flachrahmen (1) und einem Satz aus sich schneidenden Platten in der Form von Streifen, die miteinander und mit dem Flachrahmen (1) verbunden sind, um ein Feld aus Zellen (3, 4, 6) zum Unterbringen von Brennelementen und von Auflageelementen des Brennstabbündels zu erzeugen,
von denen zumindest einige hexaedrisch (3) sind, und
dreiflächige Zellen (4) benachbart zu den hexaedrischen Zellen (3) für die Kühlflüssigkeit,
**wobei** die Seiten der hexaedrischen Zellen (3) mit Mischplattenleitblechen (5) ausgestattet sind, die in Richtung auf die dreiflächigen Zellen (4) zu gebogen sind,
**wobei** die Zellen (6) zum Unterbringen der Auflageelemente eine im Querschnitt kreisförmige Gestalt besitzen, und
die Zellen (3) zum Unterbringen der Brennelemente hexaedrisch sind, **wobei** zwei Flächen in einer jeden dreiflächigen Zelle (4) konkav sind und die Mischplattenleitbleche (5) an den Seiten einer dritten Fläche vorgesehen sind und
so gebogen sind, dass die Leitbleche (5) der dreiflächigen Zellen (4) benachbart zu einer einzelnen hexaedrischen Zelle (3) in eine Umlaufrichtung rund um die hexaedrische Zelle (3) geneigt sind.

2. Mischgitter nach Anspruch 1,
außerdem aufweisend ein zweites Feld von Zellen (8), um einen Abstand der miteinander und mit dem Flachrahmen (1) verbundenen Brennelemente zu erzeugen,
**wobei** die Zellen (8) in einem sechseckigen Muster angeordnet sind und jede Zelle (8) eine sechseckige Form mit drei Auflagen (9) für ein Brennelement besitzt, und welche außerdem
in einem Abstand von 120° zueinander angeordnet sind und
durch die Ausbuchtungen an den Seiten der Zelle (8) gebildet und in Richtung zu deren Innenseite angeordnet sind.

## Revendications

1. Grille de mélange d'un assemblage combustible de réacteur nucléaire, comportant un cadre (1) et un ensemble de plaques entrecroisées qui se présentent sous la forme de bandes reliées entre elles et au cadre (1) afin de créer un champ de cellules (3, 4, 6) destinées à contenir des éléments de combustible et des éléments de support de l'assemblage combustible, dont certaines au moins sont à six pans (3),
et des cellules (4) à trois pans adjacentes aux cellules (3) à six pans pour le liquide de refroidissement,
les extrémités des cellules (3) à six pans étant pourvues de plaques déflectrices de mélange (5) pliées en direction des cellules (4) à trois pans, les cellules (6) destinées à contenir les éléments de support présentant une forme circulaire en coupe transversale et
les cellules (3) destinées à contenir les éléments de combustible étant à six pans,
deux faces de chaque cellule (4) à trois pans étant concaves et
les plaques déflectrices de mélange (5) étant prévues à l'extrémité de la troisième face et
étant pliées de manière telle que les plaques déflectrices (5) des cellules (4) à trois pans adjacentes à une cellule individuelle (3) à six pans sont inclinées dans une direction circulaire autour de la cellule (3) à six pans.

2. Grille de mélange selon la revendication 1,
comportant en outre un deuxième champ de cellules (8) pour espacer les éléments de combustible reliés entre eux et au cadre (1),
les cellules (8) étant agencées selon un motif hexagonal, et chaque cellule (8) ayant une forme hexagonale présentant trois supports (9) pour un élément de combustible, et
étant en outre espacées de 120° entre elles et
étant formées par les convexités sur les faces de la cellule (8) et agencées en direction de l'intérieur de celle-ci.
